# DEMANDE DE BREVET EUROPEEN

(11) **EP 3 373 253 A1**
(43) Date de publication de la demande: **12.09.2018**
(21) Numéro de dépôt: 18161053.6
(22) Date de dépôt: 09.03.2018
(51) Int. Cl.: G07B 15/06, G07B 15/04

(54) **PROCÉDÉ ET SYSTÈME DE PÉAGE AUTOROUTIER APTE À AUTORISER L'ACCÈS D'UNE AUTOROUTE À UN VÉHICULE D'UN UTILISATEUR**

(30) Priorité: 10.03.2017 FR 1751985
(71) Demandeur: SANEF, 92130 Issy Les Moulineaux (FR)
(72) Inventeur: REINOLD, Lionel, 60280 VENETTE (FR); GIELBLAT, Jacques, 77310 BOISSISE LE ROI (FR); DAVROU, Sylvain, 60550 VERNEUIL-EN-HALATTE (FR); FREMONT, Guy, 75015 PARIS (FR); FISCHER, Edouard, 92130 ISSY-LES-MOULINEAUX (FR)
(74) Mandataire: Gevers & Orès

(57) **Abrégé**

- Procédé et dispositif de péage autoroutier apte à autoriser l'accès d'une autoroute à un véhicule (1) d'un utilisateur empruntant un couloir de péage (2) d'une infrastructure autoroutière (3) au moyen d'un terminal mobile stockant une application dédiée, le procédé comprenant une étape de réveil de l'application dédiée, une étape de géolocalisation du terminal mobile (4) et une étape d'identification consistant à effectuer une identification de l'utilisateur, l'identification de l'utilisateur générant une autorisation d'accès de l'autoroute au véhicule (1).

## Description

### DOMAINE TECHNIQUE

La présente invention concerne le domaine des péages autoroutiers. Plus particulièrement, elle vise un procédé et un système de péage autoroutier apte à autoriser l'accès d'une autoroute à un véhicule d'un utilisateur.

### ÉTAT DE LA TECHNIQUE

De manière connue, les péages autoroutiers (ou gares de péage) comprennent une pluralité de couloirs de péage fermés par des barrières de péage. Chacun des couloirs de péage comprend généralement une borne ou un automate de paiement permettant de réaliser une transaction pour déclencher l'ouverture de la barrière de péage.

De manière classique, le paiement permettant le déclenchement de l'ouverture de la barrière de péage s'effectue en espèces ou par carte bancaire, par exemple, sans contact selon la technologie de communication en champ proche (NFC pour « Near Field Communication » en anglais). Ces techniques nécessitent l'arrêt de chaque véhicule pour réaliser le paiement, ce qui a pour inconvénient de ralentir le trafic autoroutier au niveau du péage et de pouvoir entraîner des embouteillages, notamment en période de fortes affluences.

### EXPOSÉ DE L'INVENTION

La présente invention a pour objet de pallier cet inconvénient en proposant un procédé et un dispositif de paiement et franchissement du péage en mode « mains libres » et avec un arrêt aussi court que possible, voire sans arrêt selon la signalisation en place.

À cet effet, l'invention concerne un procédé de péage autoroutier apte à autoriser l'accès d'une autoroute à un véhicule d'un utilisateur empruntant un couloir de péage d'une infrastructure autoroutière au moyen d'un terminal mobile situé dans le véhicule, l'infrastructure autoroutière comprenant une pluralité de couloirs de péage, le terminal mobile contenant un module d'émission-réception, un processeur et une mémoire stockant une application dédiée, l'application dédiée étant mise en oeuvre en tâche de fond par le processeur.

Selon l'invention, le procédé comprend les étapes suivantes :
- une étape de réveil de l'application dédiée lorsque le véhicule s'approche du couloir de péage, ladite étape de réveil étant mise en oeuvre par un module de surveillance de l'application dédiée, consistant à lancer l'application dédiée à la réception d'un premier signal via le module d'émission-réception du terminal mobile, le premier signal étant émis par une première balise du couloir de péage emprunté par le véhicule ;
- une étape de géolocalisation du terminal mobile au moment où le véhicule s'approche de l'infrastructure autoroutière, ladite étape de géolocalisation étant mise en oeuvre par un module de géolocalisation de l'application dédiée et consistant à déterminer la géolocalisation du terminal mobile de manière à géolocaliser le véhicule dans le couloir de péage, à l'aide d'au moins le premier signal reçu de la première balise ;
si l'étape de géolocalisation a déterminé une géolocalisation du terminal mobile dans le couloir de péage face à une barrière de péage du couloir de péage emprunté par le véhicule, le procédé comprend :
- une étape d'identification, mise en oeuvre par un ensemble d'identification, consistant à effectuer une identification de l'utilisateur, l'identification de l'utilisateur générant une autorisation d'accès de l'autoroute au véhicule.

Grâce au module de surveillance et au module de géolocalisation, le véhicule susceptible d'emprunter un couloir de péage est géolocalisé au moment où il s'approche de l'infrastructure autoroutière. Dès que le véhicule est géolocalisé dans un couloir de péage, le module d'identification permet d'identifier l'utilisateur. Comme le véhicule est géolocalisé grâce au terminal mobile sans que l'utilisateur n'ait à approcher de moyens de paiement, l'utilisateur du véhicule n'a pas besoin de tenir son terminal mobile en main pour obtenir l'accès ou non de l'autoroute au véhicule ; il doit suivre la signalisation qui pourra lui demander de ralentir ou de marquer l'arrêt.

En outre, le module d'émission-réception du terminal mobile est configuré pour fonctionner avec un protocole de la technique de transmission bidirectionnelles à courte portée, appelée « *Bluetooth Low Energy* ».

De plus, le premier signal émis par la première balise comprend des informations contenant au moins un identifiant du couloir de péage et la position de la première balise.

Selon un premier mode de réalisation, l'étape de géolocalisation comprenant les sous-étapes suivantes :
- une sous-étape de réception, mise en oeuvre par le module d'émission-réception du terminal mobile, consistant à recevoir au moins un deuxième signal émis par une deuxième balise et un troisième signal émis par une troisième balise, le deuxième signal et le troisième signal comprenant des informations contenant au moins un identifiant du couloir de péage et des positions respectives de la deuxième balise et de la troisième balise ;
- une sous-étape de calcul, mise en oeuvre par le module de géolocalisation de l'application dédiée, consistant à calculer par triangulation la géolocalisation du terminal mobile à partir des positions respectives des balises ayant le même identifiant du couloir de péage, lesdites positions étant déduites des premier, deuxième et troisième signaux reçus.

Selon un deuxième mode de réalisation, l'étape de géolocalisation comprend les sous-étapes suivantes :
- une sous-étape de réception, mise en oeuvre par le module d'émission-réception du terminal mobile, consistant à recevoir un signal émis par une antenne directive d'un dispositif d'émission associé au couloir de péage emprunté par le véhicule, l'antenne directive émettant un signal seulement dans le couloir de péage, le signal comprenant des informations contenant au moins l'identifiant du couloir de péage ;
- une sous-étape de calcul, mise en oeuvre par le module de géolocalisation de l'application dédiée, consistant à déterminer la géolocalisation du terminal mobile, le terminal mobile étant géolocalisé dans le couloir de péage emprunté par le véhicule lorsque l'identifiant du couloir de péage compris dans le signal émis par l'antenne directive correspond à l'identifiant du couloir de péage compris dans le signal émis par la première balise.

Par ailleurs, l'étape d'identification comprend les sous-étapes suivantes :
- une sous-étape d'authentification de l'infrastructure autoroutière par le terminal mobile consistant à authentifier l'infrastructure autoroutière par au moins l'envoi d'au moins un jeton et d'une première signature électronique générée à partir du jeton, le jeton et la première signature étant envoyés par l'infrastructure autoroutière au terminal mobile ;
- une sous-étape d'authentification du terminal mobile par l'infrastructure autoroutière consistant à authentifier le terminal mobile par au moins l'envoi d'au moins une deuxième signature électronique générée à partir du jeton, la deuxième signature étant envoyée par le terminal mobile à l'infrastructure autoroutière ;
- une sous-étape d'autorisation, mise en oeuvre par un module de calcul d'un serveur de l'infrastructure autoroutière, consistant à mettre en oeuvre l'une ou l'autre des actions suivantes :
   ∘ si le module de calcul du serveur de l'infrastructure autoroutière déduit que la deuxième signature est générée à partir dudit jeton, le serveur de l'infrastructure autoroutière envoie un signal représentatif d'une autorisation d'accès du véhicule,
   ∘ si le module de calcul du serveur de l'infrastructure autoroutière déduit que la deuxième signature n'est pas générée à partir dudit jeton, le serveur de l'infrastructure autoroutière envoie un signal représentatif d'un refus d'accès du véhicule.

De plus, la sous-étape d'authentification de l'infrastructure autoroutière par le terminal mobile comprend :
- une première sous-étape d'envoi d'identifiant, mise en oeuvre par le module d'émission-réception du terminal mobile, consistant à envoyer un signal représentatif d'un identifiant unique de paiement, le signal étant envoyé au serveur de l'infrastructure autoroutière ;
- une sous-étape de génération d'un jeton, mise en oeuvre par le module de calcul du serveur de l'infrastructure autoroutière, consistant à générer un jeton représentatif d'informations d'une transaction à autoriser ;
- une sous-étape de génération d'une première signature, mise en oeuvre par le module de calcul du serveur de l'infrastructure autoroutière, consistant à générer une première signature à partir du jeton en cryptant le jeton par une première clé privée du serveur de l'infrastructure autoroutière, la première clé privée du serveur de l'infrastructure autoroutière étant stockée dans une mémoire sécurisée du serveur de l'infrastructure autoroutière ;
- une sous-étape de réception, mise en oeuvre par le module d'émission-réception du terminal mobile, consistant à recevoir le jeton et la première signature générés par le module de calcul du serveur de l'infrastructure autoroutière ;
- une première sous-étape de décryptage, mise en oeuvre par un module sécurisé du terminal mobile, consistant à décrypter la première signature par une clé publique du serveur de l'infrastructure autoroutière, la clé publique du serveur de l'infrastructure autoroutière étant stockée dans une mémoire sécurisée du terminal mobile.

En outre, la sous-étape d'authentification du terminal mobile par l'infrastructure autoroutière comprend :
- une sous-étape de génération d'une deuxième signature, mise en oeuvre par le module sécurisé du terminal mobile, consistant à générer une deuxième signature en cryptant le jeton par une clé privée dérivée concernant le terminal mobile ;
- une deuxième sous-étape d'envoi, mise en oeuvre par le module d'émission-réception du terminal mobile, consistant à envoyer au serveur de l'infrastructure autoroutière la deuxième signature ;
- une deuxième sous-étape de décryptage, mise en oeuvre par le module de calcul du serveur de l'infrastructure autoroutière, consistant à décrypter la deuxième signature par une clé publique dérivée concernant le terminal mobile.

Par ailleurs, la sous-étape d'autorisation mise en oeuvre par le module de calcul du serveur de l'infrastructure autoroutière comprend en outre :
- si le module de calcul du serveur de l'infrastructure autoroutière déduit que la deuxième signature est générée à partir du jeton, le serveur de l'infrastructure autoroutière envoie un signal représentatif d'une autorisation de transaction à un serveur fournisseur,
- si le module de calcul du serveur de l'infrastructure autoroutière déduit que la deuxième signature décryptée n'est pas générée à partir du jeton, le serveur de l'infrastructure autoroutière envoie un signal représentatif d'un refus de transaction au serveur fournisseur.

De manière avantageuse, la sous-étape d'authentification du terminal mobile par l'infrastructure autoroutière comprend en outre :
- une sous-étape de génération de la clé publique dérivée comprenant :
   ∘ une sous-étape d'envoi d'une clé publique du serveur de l'infrastructure autoroutière par ledit serveur de l'infrastructure autoroutière à un serveur fournisseur ;
   ∘ une sous-étape de génération d'une clé publique maîtresse et d'une clé privée maîtresse par un module de calcul du serveur fournisseur ;
   ∘ une sous-étape d'envoi de la clé publique maîtresse par le serveur fournisseur à la mémoire sécurisée du serveur de l'infrastructure autoroutière ;
   ∘ une sous-étape de calcul de la clé publique dérivée à partir de l'identifiant unique de paiement et de la clé publique maîtresse par le module de calcul du serveur de l'infrastructure autoroutière.

La sous-étape d'authentification du terminal mobile par l'infrastructure autoroutière comprenant également :
- une sous-étape de génération de la clé privée dérivée comprenant :
   ∘ une sous-étape de génération de l'identifiant unique de paiement par le module de calcul du serveur fournisseur et d'envoi de l'identifiant unique de paiement au terminal mobile ;
   ∘ une sous-étape de calcul de la clé privée dérivée par le module de calcul du serveur fournisseur à partir de l'identifiant unique de paiement et de la clé privée maîtresse ;
   ∘ une sous-étape d'envoi de la clé privée dérivée et de la clé publique par le serveur fournisseur à la mémoire sécurisée du terminal mobile.

Selon une particularité, le procédé comprend une étape de fonctionnement en mode dégradé, mise en oeuvre par un module de fonctionnement en mode dégradé, consistant à remplacer le module d'émission-réception par un module d'émission-réception auxiliaire.

L'invention concerne également un système de péage autoroutier apte à autoriser l'accès d'une autoroute à un véhicule d'un utilisateur empruntant un couloir de péage d'une infrastructure autoroutière au moyen d'un terminal mobile situé dans le véhicule, l'infrastructure autoroutière comprenant une pluralité de couloirs de péage, le terminal mobile contenant un module d'émission-réception, un processeur et une mémoire stockant une application dédiée, l'application dédiée étant mise en oeuvre en tâche de fond par le processeur.

Selon l'invention, le système comprend :
- au moins une première balise pour chaque couloir de péage, la ou les premières balises étant configurées pour émettre un premier signal ;
- un module de surveillance de l'application dédiée configuré pour lancer l'application dédiée à la réception du premier signal par le module d'émission-réception du terminal mobile, lorsque le véhicule s'approche du couloir de péage, le premier signal étant émis par la première balise du couloir de péage emprunté par le véhicule ;
- un module de géolocalisation de l'application dédiée configuré pour déterminer, au moment où le véhicule s'approche de l'infrastructure autoroutière, la géolocalisation du terminal mobile de manière à géolocaliser le véhicule dans le couloir de péage, à l'aide d'au moins le premier signal reçu de la première balise ;
- un ensemble d'identification configuré pour effectuer une identification de l'utilisateur si le module de géolocalisation a déterminé une géolocalisation du terminal mobile dans le couloir de péage face à une barrière de péage du couloir de péage emprunté par le véhicule, l'identification de l'utilisateur générant une autorisation d'accès de l'autoroute au véhicule.

En outre, le module d'émission-réception du terminal mobile est configuré pour fonctionner avec le protocole de la technique de transmission bidirectionnelles à courte portée, appelée « *Bluetooth Low Energy* ».

De plus, le premier signal émis par la première balise comprend des informations contenant au moins un identifiant du couloir de péage et de la position de la première balise.

Selon un premier mode de réalisation, le système comprend :
- au moins une deuxième balise et une troisième balise agencées dans l'infrastructure autoroutière, la deuxième balise étant configurée pour émettre un deuxième signal, la troisième balise étant configurée pour émettre un troisième signal, le deuxième signal et le troisième signal comprenant des informations contenant au moins un identifiant du couloir de péage et des positions respectives de la deuxième balise et de la troisième balise ;
- le module de géolocalisation de l'application dédiée étant configuré pour calculer par triangulation la géolocalisation du terminal mobile à partir des positions respectives des balises ayant le même identifiant du couloir de péage.

Selon un deuxième mode de réalisation, le système comprend :
- une antenne directive d'un dispositif d'émission associée au couloir de péage emprunté par le véhicule, l'antenne directive étant configurée pour émettre un signal seulement dans le couloir de péage, le signal comprenant des informations contenant au moins l'identifiant du couloir de péage ;
- le module de géolocalisation de l'application dédiée étant configuré pour déterminer la géolocalisation du terminal mobile, le terminal mobile étant géolocalisé dans le couloir de péage emprunté par le véhicule lorsque l'identifiant du couloir de péage compris dans le signal émis par l'antenne directive correspond à l'identifiant du couloir de péage compris dans le signal émis par la première balise.

Selon une particularité, le système comprend un module de fonctionnement en mode dégradé configuré pour remplacer le module d'émission-réception par un module d'émission-réception auxiliaire.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente un mode de réalisation d'un couloir de péage d'une infrastructure autoroutière emprunté par un véhicule ;
- la figure 2 représente schématiquement un terminal mobile selon un mode de réalisation ;
- la figure 3 représente schématiquement un serveur de l'infrastructure autoroutière selon un mode de réalisation ;
- la figure 4 représente schématiquement un serveur fournisseur selon un mode de réalisation ;
- la figure 5 représente un diagramme représentant les échanges entre les différents composants du système ;
- la figure 6 représente schématiquement les étapes du procédé.

### DESCRIPTION DÉTAILLÉE

La suite de la description fera référence aux figures citées ci-dessus.

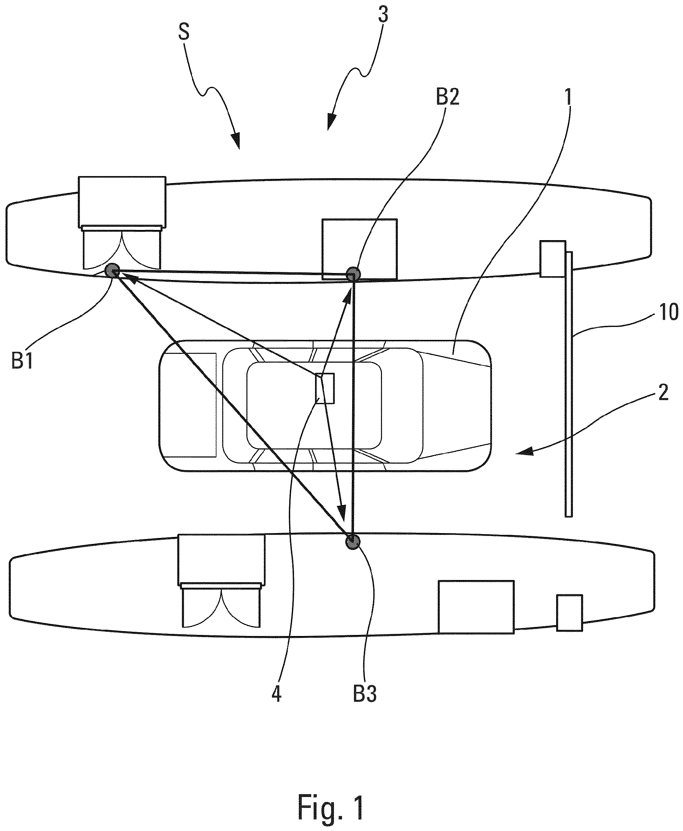

L'invention concerne un procédé et un système S de péage autoroutier apte à autoriser l'accès d'une autoroute à un véhicule 1, en particulier un véhicule automobile, d'un utilisateur empruntant un couloir de péage 2 d'une infrastructure autoroutière 3 comprenant une pluralité de couloirs de péage 2 (figure 1).

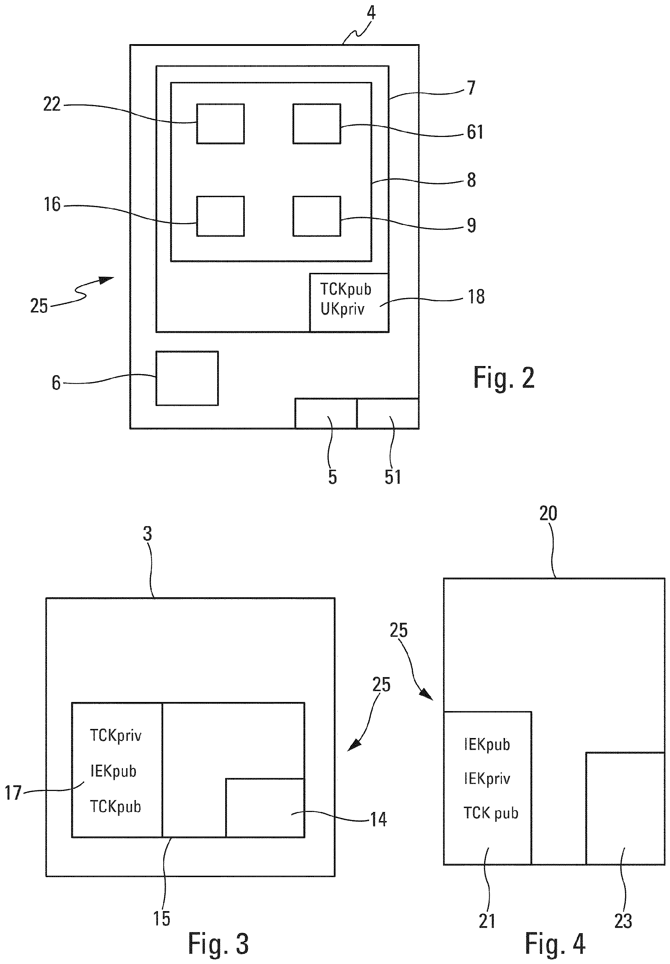

L'autorisation d'accès est donnée à l'aide d'un terminal mobile 4 en fonctionnement situé dans le véhicule 1. Comme représenté en figure 2, le terminal mobile 4 contient un module d'émission-réception 5, un processeur 6 et une mémoire 7 stockant une application dédiée 8. L'application dédiée 8 est mise en oeuvre en tâche de fond par le processeur 6.

De préférence, le module d'émission-réception 5 du terminal mobile 4 est configuré pour fonctionner avec le protocole de la technique de transmission bidirectionnelle à courte portée, appelée « *Bluetooth Low Energy* ». Bien entendu, le module d'émission-réception 5 peut être configuré pour fonctionner avec un autre protocole équivalent.

Le système S comprend un module de surveillance 61 de l'application dédiée 8, configuré pour lancer l'application dédiée 8 à la réception d'un premier signal S1 par le module d'émission-réception 5 du terminal mobile 4. Le système S comprend au moins une première balise B1 pour chaque couloir de péage 2. Chacune des premières balises B1 est configurée pour émettre (ou envoyer) le premier signal S1.

Ainsi, lorsqu'un véhicule 1 s'approche du couloir de péage 2, le premier signal S1 émis par la première balise B1 associée au couloir de péage 2 emprunté par le véhicule 1 permet le lancement de l'application dédiée 8.

Le lancement de l'application dédiée 8 signifie que le système d'exploitation du terminal mobile 4 autorise l'exécution des étapes mises en oeuvre par l'application dédiée 8 et fournit un espace mémoire du terminal mobile 4 pour permettre l'exécution des étapes.

De manière avantageuse, le premier signal S1 émis par la première balise B1 comprend des informations contenant au moins un identifiant du couloir de péage 2 et la position de la première balise B1. Les informations contenues dans le premier signal S1 peuvent comprendre, en outre, un identifiant universel unique (UUID pour « Universally Unique IDentifier » en anglais) d'une partie d'un réseau autoroutier.

Le système S comprend en outre un module de géolocalisation 9 de l'application dédiée 8, configuré pour déterminer la géolocalisation du terminal mobile 4, à l'aide d'au moins le premier signal S1 reçu de la première balise B1.

Le premier signal S1 qui permet le lancement de l'application dédiée 8 peut être le premier signal S1 d'une première balise B1 qui n'est pas associée au couloir de péage 2 que le véhicule 1 a l'intention d'emprunter. C'est le module de géolocalisation 9 qui permet de déterminer le couloir de péage 2 emprunté par le véhicule 1.

Selon un premier mode de réalisation, le système S comprend au moins une deuxième balise B2 et une troisième balise B3 agencées au niveau de l'infrastructure autoroutière 3. Dans l'exemple de la figure 1, la deuxième balise B2 et la troisième balise B3 sont disposées de part et d'autre du couloir de péage 2. La deuxième balise B2 est configurée pour émettre un deuxième signal S2. La troisième balise B3 est configurée pour émettre un troisième signal S3. Le module d'émission-réception 5 du terminal mobile 4 reçoit le deuxième signal S2 émis par la deuxième balise B2 et le troisième signal S3 émis par la troisième balise B3.

De manière avantageuse, si le module d'émission-réception 5 reçoit plusieurs premiers signaux S1 de différentes premières balises B1 de plusieurs couloirs de péage 2, le module de géolocalisation 9 peut considérer la moyenne la plus élevée de ces signaux S1, S2 et S3. Pour déterminer l'ensemble des trois balises B1, B2 et B3 qui correspondent aux balises les plus proches, le module de géolocalisation 9 tient compte de l'intensité de chacun des signaux S1, S2 et S3 reçus par le module d'émission-réception 5. Généralement, la balise la plus proche correspond au signal reçu dont l'intensité est la plus importante au niveau du terminal mobile 4.

Le deuxième signal S2 et le troisième signal S3 comprennent des informations contenant au moins un identifiant du couloir de péage 2 et des positions respectives de la deuxième balise B2 et de la troisième balise B3. Comme pour la première balise B1, les informations contenues dans le deuxième signal S2 et le troisième signal S3 peuvent aussi comprendre respectivement un identifiant universel unique de la partie de réseau autoroutier concernée.

Le module de géolocalisation 9 permet de calculer par triangulation la géolocalisation du terminal mobile 4 à partir des positions respectives des balises B1, B2, B3 ayant le même identifiant du couloir de péage 2. Les positions respectives des balises B1, B2, B3 et l'identifiant du couloir de péage 2 sont déduits des signaux S1, S2, S3 émis par les balises B1, B2, B3.

Sachant que l'intensité d'un signal est inversement proportionnelle au carré de la distance entre une balise B1, B2, B3 et le module d'émission-réception 5 du terminal mobile 4, le calcul par triangulation peut être réalisé par la mesure de l'intensité de chacun des signaux S1, S2, S3 par le module d'émission-réception 5 du terminal mobile 4.

Le système S peut comprendre plus de trois balises pour améliorer la précision de la géolocalisation.

Selon un deuxième mode de réalisation (non représenté), le système S comprend un dispositif d'émission pourvu d'une antenne directive. Le dispositif d'émission est configuré pour envoyer un signal SA apte à être émise par l'antenne directive. Le module d'émission-réception 5 du terminal mobile 4 reçoit le signal SA émis par l'antenne directive du dispositif d'émission associé au couloir de péage 2 emprunté par le véhicule 1.

De manière avantageuse, si le module d'émission-réception 5 reçoit plusieurs premiers signaux S1 de différentes premières balises B1 de plusieurs couloirs de péage 2, le module de géolocalisation 9 considère le premier signal S1 émis par la première balise B1 la plus proche. Pour déterminer la première balise B1 qui correspond à la première balise B1 la plus proche, le module de géolocalisation 9 tient compte de l'intensité de chacun des premiers signaux S1 reçus par le module d'émission-réception 5. Généralement, la première balise B1 la plus proche correspond au premier signal S1 reçu dont l'intensité est la plus importante au niveau du terminal mobile 4.

L'antenne directive émet un signal SA seulement dans le couloir de péage 2. Le signal SA émis par l'antenne directive comprend des informations contenant au moins l'identifiant du couloir de péage 2.

Dans ce mode de réalisation, le module de géolocalisation 9 de l'application dédiée 8 permet de déterminer la géolocalisation du terminal mobile 4. Le terminal mobile 4 est géolocalisé dans le couloir de péage 2 emprunté par le véhicule 1 lorsque l'identifiant du couloir de péage 2 compris dans le signal SA émis par l'antenne directive correspond à l'identifiant du couloir de péage 2 compris dans le signal S1 émis par la première balise B1.

Le système S comprend également un ensemble d'identification 25, configuré pour effectuer une identification de l'utilisateur, si le module de géolocalisation 9 a déterminé la géolocalisation du terminal mobile 4 dans le couloir de péage 2 face à une barrière de péage 10 du couloir de péage 2 emprunté par le véhicule 1.

Le système S comprend également un serveur 15 faisant partie de l'infrastructure autoroutière 3 (figure 3). Le serveur 15 de l'infrastructure autoroutière 3 est pourvu d'un module de calcul 14.

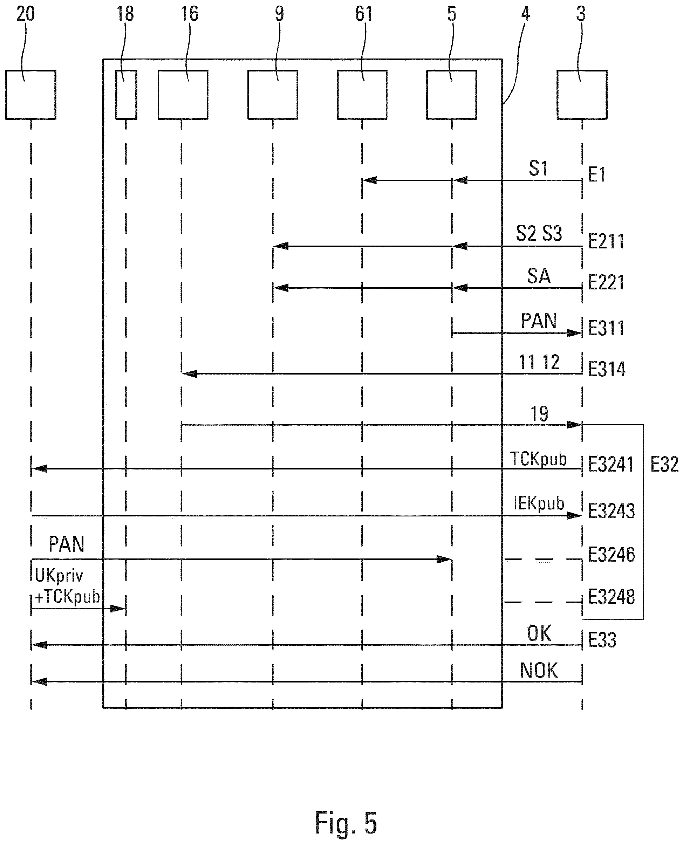

L'ensemble d'identification 25 est configuré pour que le terminal mobile 4 authentifie l'infrastructure autoroutière 3. Pour cela, l'infrastructure autoroutière 3 envoie au terminal mobile 4 au moins un jeton 11 et une première signature électronique 12 générée à partir dudit jeton 11, comme représenté sur la figure 5.

De façon non limitative, le jeton 11 est un jeton électronique. Ledit jeton 11 correspond à une information codée représentant l'horodatage du passage, l'identifiant de l'infrastructure de péage et le montant à payer..

L'ensemble d'identification est également configuré pour que le terminal mobile 4 soit authentifié par l'infrastructure autoroutière 3. Pour cela, le terminal mobile 4 envoie à l'infrastructure autoroutière 3 au moins une deuxième signature électronique 13 générée à partir du jeton 11 (figure 5).

Le module de calcul 14 du serveur 15 de l'infrastructure autoroutière 3 de l'infrastructure autoroutière 3 est configuré pour mettre en oeuvre l'une ou l'autre des actions suivantes :
∘ si le module de calcul 14 du serveur 15 de l'infrastructure autoroutière 3 déduit que la deuxième signature 13 est générée à partir du jeton 11, le serveur 15 de l'infrastructure autoroutière 3 envoie un signal représentatif d'une autorisation d'accès du véhicule 1,
∘ si le module de calcul 14 du serveur 15 de l'infrastructure autoroutière 3 déduit que la deuxième signature 13 n'est pas générée à partir du jeton 11, le serveur 15 de l'infrastructure autoroutière 3 envoie un signal représentatif d'un refus d'accès du véhicule 1.

Lorsque le serveur 15 de l'infrastructure autoroutière 3 envoie un signal représentatif d'une autorisation d'accès du véhicule 1, la barrière de péage 10 est levée pour laisser passer le véhicule 1.

Lorsque le serveur 15 de l'infrastructure autoroutière 3 envoie un signal représentatif d'un refus d'accès du véhicule 1, la barrière de péage 10 reste baissée pour empêcher l'accès du véhicule 1 à l'autoroute.

Dans une configuration de péage sans barrière, si le serveur 15 de l'infrastructure autoroutière 3 envoie un signal représentatif d'un refus d'accès du véhicule 1, ce véhicule 1 devra régler le montant du péage dû par un autre moyen pour avoir un accès autorisé à l'autoroute.

Dans un mode de réalisation, l'ensemble d'identification met en oeuvre une cryptographie asymétrique, de préférence par un chiffrement par courbe elliptique. Pour cela, le serveur 15 de l'infrastructure autoroutière 3 comprend une mémoire sécurisée 17 stockant une clé privée TCKpriv du serveur 15 de l'infrastructure autoroutière 3 et une clé publique dérivée UKpub du terminal mobile 4, et le terminal mobile 4 comprend une mémoire sécurisée 18 stockant une clé privée dérivée UKpriv concernant le terminal mobile 4 et une clé publique TCKpub concernant le serveur 15 de l'infrastructure autoroutière 3. La clé publique TCKpub a été envoyée au terminal mobile 4 par un serveur fournisseur 20.

Le terminal mobile 4 authentifie l'infrastructure autoroutière 3 de la manière suivante (figure 5).

Le module d'émission-réception 5 du terminal mobile 4 est configuré pour envoyer un signal représentatif d'un identifiant unique de paiement PAN (PAN pour « Personal Account Number » en anglais). Ce signal PAN est envoyé au serveur 15 de l'infrastructure autoroutière 3.

Le module de calcul 14 du serveur 15 de l'infrastructure autoroutière 3 génère un jeton 11 représentatif d'informations de la transaction à autoriser et génère la première signature 12. La première signature 12 est générée par le cryptage dudit jeton 11 par la clé privée TCKpriv du serveur de l'infrastructure autoroutière 3, qui est stockée dans la mémoire sécurisée 18 du serveur 15 de l'infrastructure autoroutière 3.

Le module d'émission-réception 5 du terminal mobile 4 reçoit alors le jeton 11 et la première signature 12 envoyés par le serveur 15 de l'infrastructure autoroutière 3.

Le module sécurisé 16 du terminal mobile 4 décrypte la première signature 12. Le décryptage est réalisé à l'aide de la clé publique TCKpub du serveur 15 de l'infrastructure autoroutière 3 qui est stockée dans la mémoire sécurisée 18 du terminal mobile 4.

Si le jeton 11 décrypté correspond au jeton 11 envoyé, l'infrastructure autoroutière 3 est authentifiée par le terminal mobile 4.

Le terminal mobile 4 est alors authentifié par l'infrastructure autoroutière 3 de la manière suivante (figure 5).

Le module sécurisé 16 du terminal mobile 4 génère une deuxième signature 13. La deuxième signature 13 est générée par le cryptage dudit jeton 11 par la clé privée dérivée UKpriv concernant le terminal mobile 4 stockée dans la mémoire sécurisée 18 du terminal mobile 4.

Le module d'émission-réception 5 du terminal mobile 4 envoie ensuite la deuxième signature 13 au serveur 15 de l'infrastructure autoroutière 3.

Après avoir reçu la deuxième signature 13, le module de calcul 14 du serveur 15 de l'infrastructure autoroutière 3 décrypte la deuxième signature 13 à l'aide de la clé publique dérivée UKpub.

Le module de calcul du serveur de l'infrastructure autoroutière 3 autorise ou non l'accès du véhicule 1 à l'autoroute.

Si le module de calcul 14 du serveur 15 de l'infrastructure autoroutière 3 déduit que la deuxième signature 13 est générée à partir du jeton 11, le serveur 15 de l'infrastructure autoroutière 3 envoie un signal représentatif d'une autorisation d'accès du véhicule 1.

Si le module de calcul 14 du serveur 15 de l'infrastructure autoroutière 3 déduit que la deuxième signature décryptée n'est pas générée à partir du jeton 11, le serveur de l'infrastructure autoroutière 3 envoie un signal représentatif d'un refus d'accès du véhicule 1.

En outre, si le module de calcul 14 du serveur 15 de l'infrastructure autoroutière 3 déduit que la deuxième signature 13 est générée à partir du jeton 11, le serveur de l'infrastructure autoroutière 3 envoie un signal représentatif d'une autorisation de transaction OK à un serveur fournisseur 20. Si le module de calcul 14 du serveur 15 de l'infrastructure autoroutière 3 déduit que la deuxième signature 13 n'est pas générée à partir du jeton 11, le serveur 15 de l'infrastructure autoroutière 3 envoie un signal représentatif d'un refus de transaction NOK au serveur fournisseur.

La clé publique dérivée UKpub peut être générée de la manière suivante (figure 5).

La clé publique TCKpub du serveur 15 de l'infrastructure autoroutière 3 est envoyée par ledit serveur 15 de l'infrastructure autoroutière 3 au serveur fournisseur 20.

Une clé publique maîtresse IEKpub et d'une clé privée maîtresse IEKpriv sont générées par un module de calcul 23 du serveur fournisseur 20 et stockées dans une mémoire sécurisée 21 du serveur fournisseur 20 (figure 4).

La clé publique maîtresse IEKpub est alors envoyée par le serveur fournisseur 20 à la mémoire sécurisée 17 du serveur 15 de l'infrastructure autoroutière 3.

Enfin, la clé publique dérivée UKpub est calculée à partir de l'identifiant unique de paiement PAN et de la clé publique maîtresse IEKpub par le module de calcul 14 du serveur 15 de l'infrastructure autoroutière 3.

La clé privée dérivée UKpriv peut être générée de la manière suivante.

L'identifiant unique de paiement PAN est généré par le module de calcul 23 du serveur fournisseur 20 puis transmis au terminal mobile 4.

La clé privée dérivée UKpriv est calculée par le module de calcul 23 du serveur fournisseur 20 à partir de l'identifiant unique de paiement PAN et de la clé privée maîtresse IEKpriv.

Enfin, la clé privée dérivée UKpriv est envoyée par le serveur fournisseur 20 à la mémoire sécurisée 18 du terminal mobile 4 par un canal de communication sécurisé séparé du canal de transmission de l'identifiant unique de paiement PAN. La clé publique TCKpub est également envoyée par le serveur fournisseur 20 à la mémoire sécurisée 18 du terminal mobile 4.

Le système S comprend également un module de fonctionnement en mode dégradé 22 (figure 2) configuré pour remplacer le module d'émission-réception 5 par un module d'émission-réception auxiliaire 51.

Par exemple, si le module d'émission-réception 5 configuré pour fonctionner avec le protocole « *Bluetooth Low Energy* » n'est pas activé ou ne fonctionne pas, le module de fonctionnement en mode dégradé 22 permet de le remplacer par un module d'émission-réception auxiliaire 51. Le module d'émission-réception auxiliaire 51 peut être configuré pour fonctionner selon la technologie NFC.

Selon un autre exemple, si au moins l'une des balises B1, B2, B3 de l'infrastructure autoroutière 3 ne fonctionne pas pour la géolocalisation, le module de fonctionnement en mode dégradé 22 permet aussi de le remplacer par un module d'émission-réception auxiliaire 51.

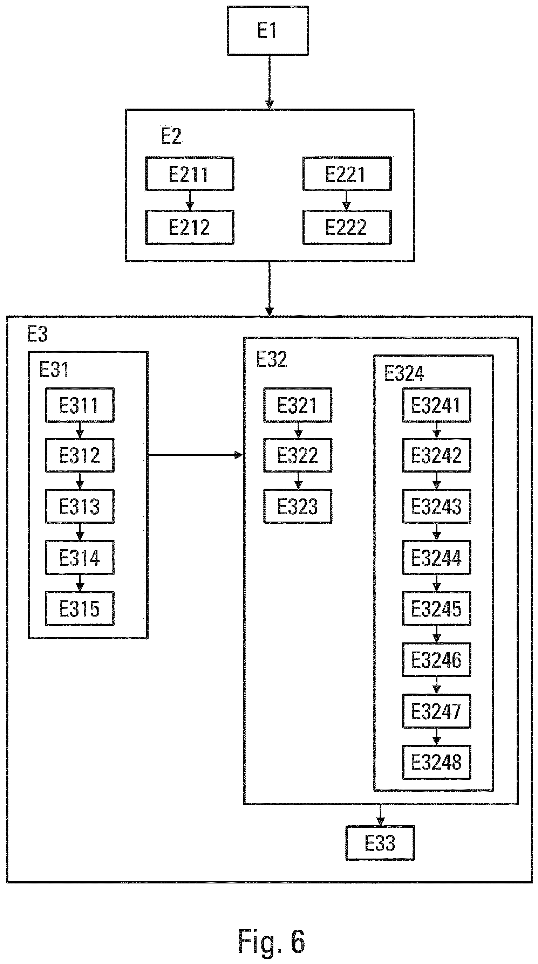

Le système S met en oeuvre le procédé comprenant les étapes suivantes (figure 6) :
- une étape de réveil E1, mise en oeuvre par le module de surveillance 61 de l'application dédiée 8, consistant à lancer l'application dédiée 8 à la réception d'un premier signal S1 via le module d'émission-réception 5 du terminal mobile 4, le premier signal S1 étant émis par une première balise B1 du couloir de péage 2 emprunté par le véhicule 1 ;
- une étape de géolocalisation E2 du terminal mobile 4, mise en oeuvre par le module de géolocalisation 9 de l'application dédiée 8, consistant à déterminer la géolocalisation du terminal mobile 4, à l'aide d'au moins le premier signal S1 reçu de la première balise B1.

Si l'étape de géolocalisation E2 a déterminé une géolocalisation du terminal mobile 4 dans le couloir de péage 2 face à une barrière de péage 10 du couloir de péage 2 emprunté par le véhicule 1, le procédé comprend :
- une étape d'identification E3, mise en oeuvre par l'ensemble d'identification, consistant à effectuer une identification de l'utilisateur, l'identification de l'utilisateur générant une autorisation d'accès de l'autoroute au véhicule 1.

Selon le premier mode de réalisation, l'étape de géolocalisation E2 comprenant les sous-étapes suivantes :
- une sous-étape de réception E211, mise en oeuvre par le module d'émission-réception 5 du terminal mobile 4, consistant à recevoir au moins un deuxième signal S2 émis par une deuxième balise B2 et un troisième signal S3 émis par une troisième balise B3, le deuxième signal S2 et le troisième signal S3 comprenant des informations contenant au moins un identifiant du couloir de péage 2 et des positions respectives de la deuxième balise B2 et de la troisième balise B3 ;
- une sous-étape de calcul E212, mise en oeuvre par le module de géolocalisation 9 de l'application dédiée 8, consistant à calculer par triangulation la géolocalisation du terminal mobile 4 à partir des positions respectives des balises B1, B2, B3 ayant le même identifiant du couloir de péage 2, lesdites positions étant déduites des premier, deuxième et troisième signaux S1, S2, S3 reçus.

Selon le deuxième mode de réalisation, l'étape de géolocalisation E2 comprend les sous-étapes suivantes :
- une sous-étape de réception E221, mise en oeuvre par le module d'émission-réception 5 du terminal mobile 4, consistant à recevoir un signal SA émis par une antenne directive d'un dispositif d'émission associé au couloir de péage 2 emprunté par le véhicule 1, l'antenne directive émettant un signal SA seulement dans le couloir de péage 2, le signal SA comprenant des informations contenant au moins l'identifiant du couloir de péage 2 ;
- une sous-étape de calcul E222, mise en oeuvre par le module de géolocalisation 9 de l'application dédiée 8, consistant à déterminer la géolocalisation du terminal mobile 4, le terminal mobile 4 étant géolocalisé dans le couloir de péage 2 emprunté par le véhicule 1 lorsque l'identifiant du couloir de péage 2 compris dans le signal SA émis par l'antenne directive correspond à l'identifiant du couloir de péage 2 compris dans le signal S1 émis par la première balise B1.

L'étape d'identification E3 comprend les sous-étapes suivantes :
- une sous-étape d'authentification E31 de l'infrastructure autoroutière 3 par le terminal mobile 4 consistant à authentifier l'infrastructure autoroutière 3 par au moins l'envoi d'au moins un jeton 11 et d'une première signature électronique 12 générée à partir du jeton 11, le jeton 11 et la première signature 12 étant envoyés par l'infrastructure autoroutière 3 au terminal mobile 4 ;
- une sous-étape d'authentification E32 du terminal mobile 4 par l'infrastructure autoroutière 3 consistant à authentifier le terminal mobile 4 par au moins l'envoi d'au moins une deuxième signature électronique 13 générée à partir du jeton 11, la deuxième signature 13 étant envoyée par le terminal mobile 4 à l'infrastructure autoroutière 3 ;
- une sous-étape d'autorisation E33, mise en oeuvre par le module de calcul 14 d'un serveur 15 de l'infrastructure autoroutière 3, consistant à mettre en oeuvre l'une ou l'autre des actions suivantes :
   ∘ si le module de calcul 14 du serveur 15 de l'infrastructure autoroutière 3 déduit que la deuxième signature 13 est générée à partir dudit jeton 11, le serveur 15 de l'infrastructure autoroutière 3 envoie un signal représentatif d'une autorisation d'accès du véhicule 1,
   ∘ si le module de calcul 14 du serveur 15 de l'infrastructure autoroutière 3 déduit que la deuxième signature 13 n'est pas générée à partir dudit jeton 11, le serveur 15 de l'infrastructure autoroutière 3 envoie un signal représentatif d'un refus d'accès du véhicule 1.

La sous-étape d'authentification E31 de l'infrastructure autoroutière 3 par le terminal mobile 4 comprend :
- une première sous-étape d'envoi d'identifiant E311, mise en oeuvre par le module d'émission-réception 5 du terminal mobile, consistant à envoyer un signal représentatif d'un identifiant unique de paiement PAN, le signal étant envoyé au serveur 15 de l'infrastructure autoroutière 3 ;
- une sous-étape de génération d'un jeton E312, mise en oeuvre par le module de calcul 14 du serveur 15 de l'infrastructure autoroutière 3, consistant à générer un jeton 11 représentatif d'informations d'une transaction à autoriser ;
- une sous-étape de génération d'une première signature E313, mise en oeuvre par le module de calcul 14 du serveur 15 de l'infrastructure autoroutière 3, consistant à générer une première signature 12 à partir du jeton 11 en cryptant le jeton 11 par une première clé privée TCKpriv du serveur 15 de l'infrastructure autoroutière 3, la première clé privée TCKpriv du serveur 15 de l'infrastructure autoroutière 3 étant stockée dans une mémoire sécurisée 17 du serveur 15 de l'infrastructure autoroutière 3 ;
- une sous-étape de réception E314, mise en oeuvre par le module d'émission-réception 5 du terminal mobile 4, consistant à recevoir le jeton 11 et la première signature 12 générés par le module de calcul 14 du serveur 15 de l'infrastructure autoroutière 3 ;
- une première sous-étape de décryptage E315, mise en oeuvre par un module sécurisé 16 du terminal mobile 4, consistant à décrypter la première signature 12 par une clé publique TCKpub du serveur 15 de l'infrastructure autoroutière 3, la clé publique TCKpub du serveur 15 de l'infrastructure autoroutière 3 étant stockée dans une mémoire sécurisée 18 du terminal mobile 4.

La sous-étape d'authentification E32 du terminal mobile 4 par l'infrastructure autoroutière 3 comprend :
- une sous-étape de génération d'une deuxième signature E321, mise en oeuvre par le module sécurisé 16 du terminal mobile 4, consistant à générer une deuxième signature 19 en cryptant le jeton 11 par une clé privée dérivée (UKpriv) concernant le terminal mobile 4 ;
- une deuxième sous-étape d'envoi E322, mise en oeuvre par le module d'émission-réception 5 du terminal mobile 5, consistant à envoyer au serveur 15 de l'infrastructure autoroutière 3 la deuxième signature 19 ;
- une deuxième sous-étape de décryptage E323, mise en oeuvre par le module de calcul 14 du serveur 15 de l'infrastructure autoroutière 3, consistant à décrypter la deuxième signature 19 par une clé publique dérivée UKpub concernant le terminal mobile 4.

La sous-étape d'autorisation E33 mise en oeuvre par le module de calcul 14 du serveur 15 de l'infrastructure autoroutière 3 comprend en outre :
∘ si le module de calcul 14 du serveur 15 de l'infrastructure autoroutière 3 déduit que la deuxième signature 19 est générée à partir du jeton 11, le serveur 14 de l'infrastructure autoroutière 3 envoie un signal représentatif d'une autorisation de transaction OK à un serveur fournisseur 20,
∘ si le module de calcul 14 du serveur 15 de l'infrastructure autoroutière 3 déduit que la deuxième signature 19 décryptée n'est pas générée à partir du jeton 11, le serveur 15 de l'infrastructure autoroutière 3 envoie un signal représentatif d'un refus de transaction NOK au serveur fournisseur 20.

La sous-étape d'authentification E32 du terminal mobile 4 par l'infrastructure autoroutière 3 comprend en outre une sous-étape de génération E324 de la clé publique dérivée UKpub comprenant :
- une sous-étape d'envoi E3241 d'une clé publique TCKpub du serveur 15 de l'infrastructure autoroutière 3 par ledit serveur 15 de l'infrastructure autoroutière 3 à un serveur fournisseur 20 ;
- une sous-étape de génération E3242 d'une clé publique maîtresse IEKpub et d'une clé privée maîtresse IEKpriv par un module de calcul 23 du serveur fournisseur 20 ;
- une sous-étape d'envoi E3243 de la clé publique maîtresse IEKpub par le serveur fournisseur 20 à la mémoire sécurisée 17 du serveur 15 de l'infrastructure autoroutière 3 ;
- une sous-étape de calcul E3244 de la clé publique dérivée UKpub à partir de l'identifiant unique de paiement PAN et de la clé publique maîtresse IEKpub par le module de calcul 14 du serveur 15 de l'infrastructure autoroutière 3.

La sous-étape d'authentification E32 du terminal mobile 4 par l'infrastructure autoroutière 3 comprenant également une sous-étape de génération E3245 de la clé privée dérivée UKpriv comprenant :
- une sous-étape E3246 de génération de l'identifiant unique de paiement PAN par le module de calcul 23 du serveur fournisseur 20 et d'envoi de l'identifiant unique de paiement PAN au terminal mobile 4 ;
- une sous-étape de calcul E3247 de la clé privée dérivée UKpriv par le module de calcul 23 du serveur fournisseur 20 à partir de l'identifiant unique de paiement PAN et de la clé privée maîtresse IEKpriv ;
- une sous-étape d'envoi E3248 de la clé privée dérivée UKpriv et de la clé publique TCKpub par le serveur fournisseur 20 à la mémoire sécurisée 18 du terminal mobile 4.

Le procédé comprend une étape de fonctionnement en mode dégradé, mise en oeuvre par un module de fonctionnement en mode dégradé 22, consistant à remplacer le module d'émission-réception 5 par un module d'émission-réception auxiliaire 51.

## Revendications

1. Procédé de péage autoroutier apte à autoriser l'accès d'une autoroute à un véhicule (1) d'un utilisateur empruntant un couloir de péage (2) d'une infrastructure autoroutière (3) au moyen d'un terminal mobile (4) situé dans le véhicule (1), l'infrastructure autoroutière (3) comprenant une pluralité de couloirs de péage (2), le terminal mobile (4) contenant un module d'émission-réception (5), un processeur (6) et une mémoire (7) stockant une application dédiée (8), l'application dédiée (8) étant mise en oeuvre en tâche de fond par le processeur (6), **caractérisé en ce que** le procédé comprend les étapes suivantes :
- une étape de réveil (E1) de l'application dédiée (8) lorsque le véhicule (1) s'approche du couloir de péage (2), ladite étape de réveil étant mise en oeuvre par un module de surveillance (61) de l'application dédiée (8), consistant à lancer l'application dédiée (8) à la réception d'un premier signal (S1) via le module d'émission-réception (5) du terminal mobile (4), le premier signal (S1) étant émis par une première balise (B1) du couloir de péage (2) emprunté par le véhicule (1) ;
- une étape de géolocalisation (E2) du terminal mobile (4) au moment où le véhicule s'approche de l'infrastructure autoroutière, ladite étape de géolocalisation étant mise en oeuvre par un module de géolocalisation (9) de l'application dédiée (8) et consistant à déterminer la géolocalisation du terminal mobile (4) de manière à géolocaliser le véhicule dans le couloir de péage (2), à l'aide d'au moins le premier signal (S1) reçu de la première balise (B1) ;
si l'étape de géolocalisation (E2) a déterminé une géolocalisation du terminal mobile (4) dans le couloir de péage (2) face à une barrière de péage (10) du couloir de péage (2) emprunté par le véhicule (1), le procédé comprend :
- une étape d'identification (E3), mise en oeuvre par un ensemble d'identification, consistant à effectuer une identification de l'utilisateur, l'identification de l'utilisateur générant une autorisation d'accès de l'autoroute au véhicule (1).

2. Procédé selon la revendication 1, **caractérisé en ce que** le module d'émission-réception (5) du terminal mobile (4) est configuré pour fonctionner avec un protocole de la technique de transmission bidirectionnelles à courte portée, appelée « *Bluetooth Low Energy* ».

3. Procédé selon l'une quelconque des revendications 1 ou 2, **caractérisé en ce que** le premier signal (S1) émis par la première balise (B1) comprend des informations contenant au moins un identifiant du couloir de péage (2) et la position de la première balise (B1).

4. Procédé selon l'une quelconque des revendications 1 à 3, **caractérisé en ce que** l'étape de géolocalisation (E2) comprenant les sous-étapes suivantes :
- une sous-étape de réception (E211), mise en oeuvre par le module d'émission-réception (5) du terminal mobile (4), consistant à recevoir au moins un deuxième signal (S2) émis par une deuxième balise (B2) et un troisième signal (S3) émis par une troisième balise (B3), le deuxième signal (S2) et le troisième signal (S3) comprenant des informations contenant au moins un identifiant du couloir de péage (2) et des positions respectives de la deuxième balise (B2) et de la troisième balise (B3) ;
- une sous-étape de calcul (E212), mise en oeuvre par le module de géolocalisation (9) de l'application dédiée (8), consistant à calculer par triangulation la géolocalisation du terminal mobile (4) à partir des positions respectives des balises (B1, B2, B3) ayant le même identifiant du couloir de péage (2), lesdites positions étant déduites des premier, deuxième et troisième signaux (S1, S2, S3) reçus.

5. Procédé selon l'une quelconque des revendications 1 à 3, **caractérisé en ce que** l'étape de géolocalisation (E2) comprend les sous-étapes suivantes :
- une sous-étape de réception (E221), mise en oeuvre par le module d'émission-réception (5) du terminal mobile, consistant à recevoir un signal (SA) émis par une antenne directive d'un dispositif d'émission associé au couloir de péage (2) emprunté par le véhicule (1), l'antenne directrice émettant un signal (SA) seulement dans le couloir de péage (2), le signal (SA) comprenant des informations contenant au moins l'identifiant du couloir de péage (2) ;
- une sous-étape de calcul (E222), mise en oeuvre par le module de géolocalisation (9) de l'application dédiée (8), consistant à déterminer la géolocalisation du terminal mobile (4), le terminal mobile (4) étant géolocalisé dans le couloir de péage (2) emprunté par le véhicule (1) lorsque l'identifiant du couloir de péage (2) compris dans le signal (SA) émis par l'antenne directive correspond à l'identifiant du couloir de péage (2) compris dans le signal (S1) émis par la première balise (B1).

6. Procédé selon l'une quelconque des revendications 1 à 5, **caractérisé en ce que** l'étape d'identification (E3) comprend les sous-étapes suivantes :
- une sous-étape d'authentification (E31) de l'infrastructure autoroutière (3) par le terminal mobile (4) consistant à authentifier l'infrastructure autoroutière (3) par au moins l'envoi d'au moins un jeton (11) et d'une première signature électronique (12) générée à partir du jeton (11), le jeton (11) et la première signature (12) étant envoyés par l'infrastructure autoroutière (3) au terminal mobile (4) ;
- une sous-étape d'authentification (E32) du terminal mobile (4) par l'infrastructure autoroutière (3) consistant à authentifier le terminal mobile (4) par au moins l'envoi d'au moins une deuxième signature électronique (13) générée à partir du jeton (11), la deuxième signature (13) étant envoyée par le terminal mobile (4) à l'infrastructure autoroutière (3) ;
- une sous-étape d'autorisation (E33), mise en oeuvre par un module de calcul (14) d'un serveur (15) de l'infrastructure autoroutière (3), consistant à mettre en oeuvre l'une ou l'autre des actions suivantes :
∘ si le module de calcul (14) du serveur (15) de l'infrastructure autoroutière (3) déduit que la deuxième signature (13) est générée à partir dudit jeton (11), le serveur (15) de l'infrastructure autoroutière (3) envoie un signal représentatif d'une autorisation d'accès du véhicule (1),
∘ si le module de calcul (14) du serveur (15) de l'infrastructure autoroutière (3) déduit que la deuxième signature (13) n'est pas générée à partir dudit jeton (11), le serveur (15) de l'infrastructure autoroutière (3) envoie un signal représentatif d'un refus d'accès du véhicule (1).

7. Procédé selon la revendication 6, **caractérisé en ce que** la sous-étape d'authentification (E31) de l'infrastructure autoroutière (3) par le terminal mobile (4) comprend :
- une première sous-étape d'envoi d'identifiant (E311), mise en oeuvre par le module d'émission-réception (5) du terminal mobile, consistant à envoyer un signal représentatif d'un identifiant unique de paiement (PAN), le signal étant envoyé au serveur (15) de l'infrastructure autoroutière (3) ;
- une sous-étape de génération d'un jeton (E312), mise en oeuvre par le module de calcul (14) du serveur (15) de l'infrastructure autoroutière (3), consistant à générer un jeton (11) représentatif d'informations d'une transaction à autoriser ;
- une sous-étape de génération d'une première signature (E313), mise en oeuvre par le module de calcul (14) du serveur (15) de l'infrastructure autoroutière (3), consistant à générer une première signature (12) à partir du jeton (11) en cryptant le jeton (11) par une première clé privée (TCKpriv) du serveur (15) de l'infrastructure autoroutière (3), la première clé privée (TCKpriv) du serveur (15) de l'infrastructure autoroutière (3) étant stockée dans une mémoire sécurisée (17) du serveur (15) de l'infrastructure autoroutière (3) ;
- une sous-étape de réception (E314), mise en oeuvre par le module d'émission-réception (5) du terminal mobile (4), consistant à recevoir le jeton (11) et la première signature (12) générés par le module de calcul (14) du serveur (15) de l'infrastructure autoroutière (3) ;
- une première sous-étape de décryptage (E315), mise en oeuvre par un module sécurisé (16) du terminal mobile (4), consistant à décrypter la première signature (12) par une clé publique (TCKpub) du serveur (15) de l'infrastructure autoroutière (3), la clé publique (TCKpub) du serveur (15) de l'infrastructure autoroutière (3) étant stockée dans une mémoire sécurisée (18) du terminal mobile (4).

8. Procédé selon l'une quelconque des revendications 6 ou 7, **caractérisé en ce que** la sous-étape d'authentification (E32) du terminal mobile (4) par l'infrastructure autoroutière (3) comprend :
- une sous-étape de génération d'une deuxième signature (E321), mise en oeuvre par le module sécurisé (16) du terminal mobile (4), consistant à générer une deuxième signature (19) en cryptant le jeton (11) par une clé privée dérivée (UKpriv) concernant le terminal mobile (4) ;
- une deuxième sous-étape d'envoi (E322), mise en oeuvre par le module d'émission-réception (5) du terminal mobile (5), consistant à envoyer au serveur (15) de l'infrastructure autoroutière (3) la deuxième signature (19) ;
- une deuxième sous-étape de décryptage (E323), mise en oeuvre par le module de calcul (14) du serveur (15) de l'infrastructure autoroutière (3), consistant à décrypter la deuxième signature (19) par une clé publique dérivée (UKpub) concernant le terminal mobile (4).

9. Procédé selon la revendication 6, **caractérisé en ce que** la sous-étape d'autorisation (E33) mise en oeuvre par le module de calcul (14) du serveur (15) de l'infrastructure autoroutière (3) comprend en outre :
- si le module de calcul (14) du serveur (15) de l'infrastructure autoroutière (3) déduit que la deuxième signature (19) est générée à partir du jeton (11), le serveur (14) de l'infrastructure autoroutière (3) envoie un signal représentatif d'une autorisation de transaction (OK) à un serveur fournisseur (20),
- si le module de calcul (14) du serveur (15) de l'infrastructure autoroutière (3) déduit que la deuxième signature (19) décryptée n'est pas générée à partir du jeton (11), le serveur (15) de l'infrastructure autoroutière (3) envoie un signal représentatif d'un refus de transaction (NOK) au serveur fournisseur (20).

10. Procédé selon l'une quelconque des revendications 6 à 9, **caractérisé en ce que** la sous-étape d'authentification (E32) du terminal mobile (4) par l'infrastructure autoroutière (3) comprend en outre :
- une sous-étape de génération (E324) de la clé publique dérivée (UKpub) comprenant :
∘ une sous-étape d'envoi (E3241) d'une clé publique (TCKpub) du serveur (15) de l'infrastructure autoroutière (3) par ledit serveur (15) de l'infrastructure autoroutière (3) à un serveur fournisseur (20) ;
∘ une sous-étape de génération (E3242) d'une clé publique maîtresse (IEKpub) et d'une clé privée maîtresse (IEKpriv) par un module de calcul (23) du serveur fournisseur (20) ;
∘ une sous-étape d'envoi (E3243) de la clé publique maîtresse (IEKpub) par le serveur fournisseur (20) à la mémoire sécurisée (17) du serveur (15) de l'infrastructure autoroutière (3) ;
∘ une sous-étape de calcul (E3244) de la clé publique dérivée (UKpub) à partir de l'identifiant unique de paiement (PAN) et de la clé publique maîtresse (IEKpub) par le module de calcul (14) du serveur (15) de l'infrastructure autoroutière (3) ;
la sous-étape d'authentification (E32) du terminal mobile (4) par l'infrastructure autoroutière (3) comprenant également :
- une sous-étape de génération (E3245) de la clé privée dérivée (UKpriv) comprenant :
∘ une sous-étape (E3246) de génération de l'identifiant unique de paiement (PAN) par le module de calcul (23) du serveur fournisseur (20) et d'envoi de l'identifiant unique de paiement (PAN) au terminal mobile (4) ;
∘ une sous-étape de calcul (E3247) de la clé privée dérivée (UKpriv) par le module de calcul (23) du serveur fournisseur (20) à partir de l'identifiant unique de paiement (PAN) et de la clé privée maîtresse (IEKpriv) ;
∘ une sous-étape d'envoi (E3248) de la clé privée dérivée (UKpriv) et de la clé publique (TCKpub) par le serveur fournisseur (20) à la mémoire sécurisée (18) du terminal mobile (4).

11. Procédé selon l'une quelconque des revendications 1 à 10, **caractérisé en ce que** le procédé comprend une étape de fonctionnement en mode dégradé, mise en oeuvre par un module de fonctionnement en mode dégradé (22), consistant à remplacer le module d'émission-réception (5) par un module d'émission-réception auxiliaire (51).

12. Système de télépéage autoroutier apte à autoriser l'accès d'une autoroute à un véhicule (1) d'un utilisateur empruntant un couloir de péage (2) d'une infrastructure autoroutière (3) au moyen d'un terminal mobile (4) situé dans le véhicule (1), l'infrastructure autoroutière (3) comprenant une pluralité de couloirs de péage (2), le terminal mobile (4) contenant un module d'émission-réception (5), un processeur (6) et une mémoire (7) stockant une application dédiée (8), l'application dédiée (8) étant mise en oeuvre en tâche de fond par le processeur (6),
**caractérisé en ce que** le système (S) comprend :
- au moins une première balise (B1) pour chaque couloir de péage (2), la ou les premières balises (B1) étant configurées pour émettre un premier signal (S1) ;
- un module de surveillance (61) de l'application dédiée (8) configuré pour lancer l'application dédiée (8) à la réception du premier signal (S1) par le module d'émission-réception (5) du terminal mobile (4), lorsque le véhicule (1) s'approche du couloir de péage (2), le premier signal (S1) étant émis par la première balise (B1) du couloir de péage (2) emprunté par le véhicule (1) ;
- un module de géolocalisation (9) de l'application dédiée (8) configuré pour déterminer, au moment où le véhicule s'approche de l'infrastructure autoroutière, la géolocalisation du terminal mobile (4) de manière à géolocaliser le véhicule dans le couloir de péage (2), à l'aide d'au moins le premier signal (S1) reçu de la première balise (B1) ;
- un ensemble d'identification 25 configuré pour effectuer une identification de l'utilisateur si le module de géolocalisation (9) a déterminé une géolocalisation du terminal mobile (4) dans le couloir de péage (2) face à une barrière de péage (10) du couloir de péage (2) emprunté par le véhicule (1), l'identification de l'utilisateur générant une autorisation d'accès de l'autoroute au véhicule (1).

13. Système selon la revendication 12, **caractérisé en ce que** le module d'émission-réception (5) du terminal mobile (4) est configuré pour fonctionner avec le protocole de la technique de transmission bidirectionnelles à courte portée, appelée « *Bluetooth Low Energy* ».

14. Système selon l'une quelconque des revendications 12 ou 13, **caractérisé en ce que** le premier signal (S1) émis par la première balise (B1) comprend des informations contenant au moins un identifiant du couloir de péage (2) et de la position de la première balise (B1).

15. Système selon l'une quelconque des revendications 12 à 14, **caractérisé en ce qu'**il comprend :
- au moins une deuxième balise (B2) et une troisième balise (B3) agencées dans l'infrastructure autoroutière (3), la deuxième balise (B2) étant configurée pour émettre un deuxième signal (S2), la troisième balise (B3) étant configurée pour émettre un troisième signal (S3), le deuxième signal (S2) et le troisième signal (S3) comprenant des informations contenant au moins un identifiant du couloir de péage (2) et des positions respectives de la deuxième balise (B2) et de la troisième balise (B3) ;
- le module de géolocalisation (9) de l'application dédiée (8) étant configuré pour calculer par triangulation la géolocalisation du terminal mobile (4) à partir des positions respectives des balises (B1, B2, B3) ayant le même identifiant du couloir de péage (2).

16. Système selon l'une quelconque des revendications 12 à 14, **caractérisé en ce qu'**il comprend :
- une antenne directive d'un dispositif d'émission associée au couloir de péage (2) emprunté par le véhicule (1), l'antenne directive étant configurée pour émettre un signal (SA) seulement dans le couloir de péage (2), le signal (SA) comprenant des informations contenant au moins l'identifiant du couloir de péage (2) ;
- le module de géolocalisation (9) de l'application dédiée (8) étant configuré pour déterminer la géolocalisation du terminal mobile (4), le terminal mobile (4) étant géolocalisé dans le couloir de péage (2) emprunté par le véhicule (1) lorsque l'identifiant du couloir de péage (2) compris dans le signal (SA) émis par l'antenne directive correspond à l'identifiant du couloir de péage (2) compris dans le signal (SA) émis par la première balise (B1).

17. Système selon l'une quelconque des revendications 12 à 16, **caractérisé en ce qu'**il comprend un module de fonctionnement en mode dégradé (22) configuré pour remplacer le module d'émission-réception (5) par un module d'émission-réception auxiliaire (51).
